# FASCICULE DE BREVET EUROPEEN

(11) **EP 1 960 148 B1**
(45) Date de publication et mention de la délivrance du brevet: **06.08.2014**
(21) Numéro de dépôt: 06841887.0
(22) Date de dépôt: 07.12.2006
(51) Int. Cl.: B23K 9/173

(54) **DISPOSITIF DE SOUDAGE AUTOMATIQUE DU TYPE MIG/MAG**
AUTOMATISCHE MIG/MAG SCHWEISSVORRICHTUNG
AUTOMATIC WELDING DEVICE OF THE MIG/MAG TYPE

(30) Priorité: 07.12.2005 FR 0512409
(43) Date de publication de la demande: 27.08.2008
(73) Titulaire: Serimax, 77280 Mitry-Mory (FR)
(72) Inventeur: DESTOUCHES, Denis, F-02600 Dampleux (FR)
(74) Mandataire: de Kernier, Gabriel
(86) Numéro de dépôt international: PCT/FR2006/002680
(87) Numéro de publication internationale: WO 2007/066013

(56) Documents cités:
- EP-A- 1 077 102
- DE-A- 4 436 084
- US-A- 2 061 671
- US-B1- 6 191 379

## Description

La présente invention concerne un dispositif de soudage automatique du type MIG/MAG de conduits métalliques, mis en place bout à bout concentriquement pour être soudés de manière à former des canalisations du type pipeline pour le transport de gaz, de pétrole ou d'eau tel que présenté dans le préambule de la revendication, tel que décrit dans US 2 061 671.

De manière conventionnelle, le soudage automatique de canalisations est réalisé en chanfrein étroit avec le procédé de soudage à l'arc à électrode fusible MIG/MAG et avec, comme electrode(s) fusible(s) constituant le métal d'apport, un ou des fils de section circulaire, typiquement de diamètre inférieur ou égal à 1.4mm, avec des équipements plus ou moins automatisés et qui comportent soit 1 soit 2 torches de soudage MIG/MAG.

Un tel soudage automatique est principalement utilisé en chanfrein étroit pour garantir des vitesses de soudage rapides avec une qualité correcte de la soudure, ce qui impose de chanfreiner avec précision les extrémités des tubes sur site de pose de canalisations. Par conséquent, cette nécessité de réaliser les chanfreins sur site génère des coûts importants liés à la mobilisation d'équipements coûteux (chanfreineuse, centrale hydraulique) et au besoin d'opérateurs et de personnel de maintenance associés.

Si un tel soudage automatique reste malgré tout intéressant pour des conduits de grande épaisseur, pour des canalisations de faible épaisseur, très fréquement, le soudage manuel est plus compétitif (moins cher, et plus productif) que le soudage automatique.

En effet, pour que le soudage automatique soit rentable sur des tubes de faible épaisseur, il faut à la fois :
- arriver à souder comme en soudage manuel sur des tubes pré Usinés en chanfrein large (chanfreins dits « API » à pente de 30°), et
- limiter le nombre de rotations/passages autour du tube à deux.

En soudage MIG/MAG automatique conventionnel, avec fil cylindrique en tant qu'électrode fusible, les problèmes suivants apparaissent pour le soudage sur chanfrein API en mode mono torche.

Tout d'abord, on obtient une faible productivité car trois rotations/passages autour du tube sont nécessaires pour réaliser la soudure. De plus, on a une faible vitesse de soudage pour les 2è et 3è passes, car la largeur du chanfrein est importante, en conséquence le besoin d'avoir de larges oscillations se fait ressentir, ce qui est incompatible avec une vitesse de soudage rapide.

En outre, il existe une dépendance par rapport à l'opérateur/soudeur pour centrer correctement la torche de soudage, ce qui est plus délicat en chanfrein large qu'en chanfrein étroit.

Par le document US 2 061 671, on connaît un appareil de soudage linéaire dans lequel on met en place une tête de soudage comportant une pluralité d'électrodes. Ces électrodes sont réparties par paire, chaque paire d'électrode étant logée dans une chambre de torche de soudage de manière à converger l'une vers l'autre, c'est-à-dire vers le joint de soudage. La tête de soudage comporte alors une pluralité de paires d'électrodes convergentes l'une vers l'autre et se suivant, ces paires d'électrodes pouvant être positionnées à des hauteurs différentes progressives par rapport à la ligne de joint, toutefois elles, les paires de soudage ne peuvent pas être décalées latéralement les unes par rapport aux autres. Un tel appareil de soudage parait difficilement utilisable sur un chanfrein étroit pour le soudage de conduits de canalisation du fait de son encombrement lié notamment de la convergence des électrodes de chaque paire d'électrodes.

Par le document DE 44 36 084, on connaît un dispositif de soudage par fusion pour l'assemblage de pièces avec plusieurs torches de soudage se trouvant en même temps sur une pièce, les paramètres de soudage étant réglables de sorte qu'on forme un bain de fusion unique. On propose donc des torches de soudage se suivant. En particulier, on propose d'utiliser pour l'assemblage de pièces présentant un large espace entre elles trois électrodes dont deux sont placées l'une derrière l'autre le long de la direction du joint et la troisième est décalée latéralement et inclinée entre les deux premières de sorte à se trouver entre les deux premières le long de la direction de joint. Ce positionnement n'est donc lié qu'à un problème d'encombrement des torches pour obtenir un écart dans la succession des torches se suivant selon un écart le plus petit possible.

Aucun de ces dispositifs ne propose une solution pour pouvoir réaliser un soudage à l'arc à électrode fusible sur des conduits de faible épaisseur à chanfrein dit API.

En conséquence, la présente invention a pour but de résoudre les inconvénients ci-dessus cités en proposant un dispositif de soudage automatique du type MIG/MAG avec lequel il est possible de réaliser un soudage à l'arc à électrode fusible sur des conduits de faible épaisseur dont les extrémités sont pré-usinées pour former un chanfrein dit API, à pente de 30° et qui offre une meilleure fusion latérale ainsi qu'un mécanisme plus simple.

A cet effet, l'invention a pour objet un dispositif de soudage automatique du type MIG/MAG constitué d'au moins un chariot portant au moins une tête de soudage comprenant au moins une torche guidant un fil électrode fusible le long d'un plan de joint entre des conduits à souder, qui amène le courant à l'extrémité du fil électrode pour générer un arc électrique et assurer la fusion du métal d'apport, caractérisé en ce que la tête de soudage présente donc une torche de soudage destinée à être centrée par rapport au plan de joint pour assurer la passe de pénétration et porte également au moins deux autres torches de soudage, dites suiveuses, positionnées respectivement l'une après l'autre après la première torche de soudage dite centrale et décalées respectivement de part et d'autre de la torche dite centrale pour réaliser des passes latérales.

Ainsi de manière avantageuse, le dispositif de soudage automatique selon l'invention permet de réaliser la passe de pénétration avec la torche de soudage dite centrale, positionnée centrée par rapport au plan de joint, la première torche de soudage suiveuse suivant ladite torche centrale, dans le sens d'avancée du chariot, mais décalée par rapport à ladite torche dite centrale, c'est-à-dire au plan de joint, permettant de réaliser une première passe latérale et la deuxième torche suiveuse suivant ladite première torche suiveuse par rapport au sens d'avancée du chariot mais de l'autre côté du plan de joint assurant la deuxième passe latérale.

De manière très avantageuse, le dispositif de soudage selon l'invention présente une tête de soudage beaucoup plus simple.

Selon une première forme de réalisation de l'invention, les torches suiveuses, s'étendent respectivement dans un plan parallèle au plan dans lequel s'étend la torche dite centrale, c'est-à-dire le plan de joint en utilisation.

Selon une seconde forme de réalisation de l'invention, les torches suiveuses sont inclinées par rapport au plan dans lequel s'étend la torche dite centrale, c'est-à-dire le plan de joint en utilisation, selon des angles d'une valeur égale mais de manière opposée l'une à l'autre par rapport audit plan.

Avec un dispositif de soudage selon l'invention, il n'est plus obligatoire d'imprimer une oscillation aux torches de soudage puisque la configuration desdites torches permet de réaliser les passes latérales tout en assurant une fusion latérale effective et ce, sans nécessiter de mouvement d'oscillation ou alors seulement avec une oscillation de très faible amplitude. On obtient donc un dispositif selon l'invention présentant à la fois une meilleure fusion latérale et un mécanisme plus simple au niveau de la tête de soudage. De plus, on obtient une plus grande souplesse au niveau des vitesses de soudage.

Toutefois, il peut être intéressant de maintenir un mouvement oscillant de faible amplitude de la première torche centrale et d'imprimer également une oscillation de faible amplitude auxdites deux torches suiveuses. Ce mouvement d'oscillation pourra être commun ou indépendant entre la première torche et la deux autres.

Le dispositif selon l'invention peut avantageusement être du type classique constitué de différents sous-ensembles, notamment un premier sous ensemble, tel que le chariot portant la tête de soudage, relatif au positionnement et/ou au mouvement du fil électrode par rapport au plan de joint, un deuxième sous ensemble relatif à l'arc électrique constitués de moyens de production et de contrôle de l'arc électrique, un troisième sous ensemble concernant l'alimentation en métal d'apport ainsi qu'un quatrième sous-ensemble permettant de produire et contrôler une atmosphère protectrice de gaz.

De manière avantageuse, une deuxième rotation-passage de la soudure pourra être effectuée avec un dispositif de soudage de l'invention pour terminer la soudure. Cette seconde rotation en fonction de l'épaisseur de métal restant à déposer après la première rotation pourra se faire uniquement avec les torches de soudage suiveuses ou bien avec l'ensemble des trois torches du dispositif.

De plus, de manière très avantageuse, la première torche dite torche centrale sert de référence à la régulation du soudage automatique de type MIG/MAG tandis qu'on utilise les deux torches suiveuses pour effectuer également la régulation.

Ainsi, le soudage tel qu'il est mis en oeuvre nécessite un contrôle tout au long du soudage de la distance entre torche et fond de chanfrein, au moins pour la torche centrale.

Ainsi, le dispositif selon l'invention comporte au moins des moyens de contrôle et de régulation de la distance entre la torche centrale et le fond du chanfrein. Le contrôle de cette distance est assuré par mesure en temps réel d'au moins un paramètre électrique (intensité, tension, impédance,...) de la torche centrale et régulation en temps réel dudit paramètre électrique en fonction des différentes consignes pré programmées en fonction de la position circonférentielle autour des éxtrémités des conduits à assembler, cette régulation intervenant par la régulation de ladite distance entre torche et fond de chanfrein. Pour réaliser ce contrôle, on peut se baser sur la mesure de l'intensité de soudage. En effet pendant le soudage (et avec le procédé MIG) il y a un lien direct entre la distance extrémité de torche de soudage et fond de chanfrein.

Ainsi, si les moyens de mesure d'intensité indiquent une hausse de cette dernière, cela indique que la torche de soudage s'est rapprochée du tube est si l'intensité diminue, que la torche s'éloigne. De ce fait, on peut ensuite réguler la distance torche de soudage/fond de chanfrein de manière à garder l'intensité la plus proche possible de la consigne pré programmée.

Ainsi, on prévoit des moyens appropriés pour réguler la distance entre la torche de soudage centrale et fond de chanfrein de sorte que ladite torche centrale soit positionnée au mieux par rapport aux valeurs de consigne programmées.

Selon une forme de réalisation, on peut envisager que ces moyens de régulation de la distance entre la torche de soudage centrale et le fond du chanfrein sont des moyens de régulation de la hauteur de la tête de soudage et donc des trois torches par rapport aux conduits.

Selon une forme de réalisation préférée, on peut prévoir que le dispositif comporte des moyens de contrôle et de régulation de la distance torche de soudage/fond de chanfrein pour chacune des torches de soudage. Ainsi, le contrôle de cette distance est assuré par des moyens de mesure en temps réel des paramètres électriques (intensité, tension, impédance,...) de chaque torche et régulation en temps réel dudit paramètre électrique en fonction des différentes consignes pré programmées en fonction de la position circonférentielle autour des extrémités des conduits à assembler, de sorte que chaque torche peut se positionner au mieux par rapport aux valeurs programmées. Ainsi, le dispositif de soudage comporte des moyens appropriés pour réguler la distance entre chaque torche et le fond de chanfrein, en permettant de la monter ou de la descendre par rapport au chanfrein après comparaison d'une valeur électrique mesurée et d'une valeur de consigne programmée. Cette régulation est en temps réel en fonction des différentes consignes pré programmées en fonction de la position circonférentielle autour des extrémités des conduits à assembler, cette valeur pouvant être suivant la programmation, une intensité, une tension, ou une impédance.

Le centrage de l'ensemble des torches, fixées rigidement sur un même bloc mais avec un degré de liberté pour l'oscillation, est assuré par mesure en temps réel des paramètres électriques (intensité, tension, ...) des deux torches suiveuses, puis après comparaison entre les valeurs obtenues pour chacune de ces deux torches par envoi d'un signal automatique au module de translation/centrage de la tête de soudage, donc des trois torches, afin d'obtenir les mêmes valeurs sur chacune des deux torches.

On a de ce fait un suivi de joint automatique à travers l'arc, et ce suivi de joint, est plus simple, plus précis et plus fiable que le suivi de joint à travers l'arc avec une seule torche oscillant de part et d'autre du chanfrein et pour lesquelles il faut synchroniser les mesures de paramètres électriques avec le mouvement d'oscillation.

Par ailleurs, le dispositif de soudage permet d'utiliser un procédé de soudage automatique du type MIG/MAG sur chanfrein API, tel que décrit ci-dessus, quelle que soit la position dés tubes (tubes fixes ou tubes tournant sur positionneurs/vireurs, axe des tubes horizontal ou incliné ou vertical).

Le dispositif de soudage selon l'invention permet de réaliser le soudage sur chanfrein API pour le raboutàge de conduits en acier, que ce soit de l'acier non allié, faiblement allié ou fortement allié pour résister à la corrosion, avec composition chimique du fil adapté à l'application considérée.

De préférence, la distance entre la première torche et les deux autres torches de soudage suiveuses peut être variée en fonction de l'application considérée, à l'aide de tous moyens appropriés.

On décrira maintenant l'invention plus en détail en référence au dessin dans lequel :
La figure 1 représente en vue du dessus schématique le positionnement des torches de soudage d'un dispositif selon l'invention ;
La figure 2 représente une vue avant d'un dispositif de soudage selon l'invention en position dans un chanfrein API ; et
La figure 3 représente une vue en coupe d'un chanfrein soudé partiellement après une première rotation d'un dispositif selon l'invention.

Le dispositif de soudage automatique du type MIG/MAG selon l'invention est constitué d'au moins un chariot portant une tête de soudage comportant trois torches de soudage 1, 2, 3 guidant respectivement un fil électrode fusible le long du plan de joint P entre les conduits C, C', à souder qui amène le courant à l'extrémité du fil électrode pour générer un arc électrique et assurer la fusion du métal d'apport ainsi qu'un gaz pour créer une atmosphère protectrice.

La torche de soudage 1 est centrée par rapport au plan de joint P pour assurer la passe de pénétration et la tête de soudage comporte également au moins deux autres torches de soudage dites suiveuses, 2, 3. Les torches de soudage dites suiveuses 2 ,3 sont portées de préférence par un même support. Le fil électrode de la première torche 1 dite centrale pourra être un fil plat et les fils électrodes des deux autres torches 2,3 pourront être des fils cylindriques.

La deuxième torche 2 est positionnée après la torche de soudage 1 dite centrale dans le sens d'avancée A du chariot lé long du plan de joint P mais décalée par rapport au plan de joint P et la torche suiveuse 3 est positionnée après la torche suiveuse 2 de l'autre côté du plan de joint P, également décalée par rapport à la torche centrale 1.

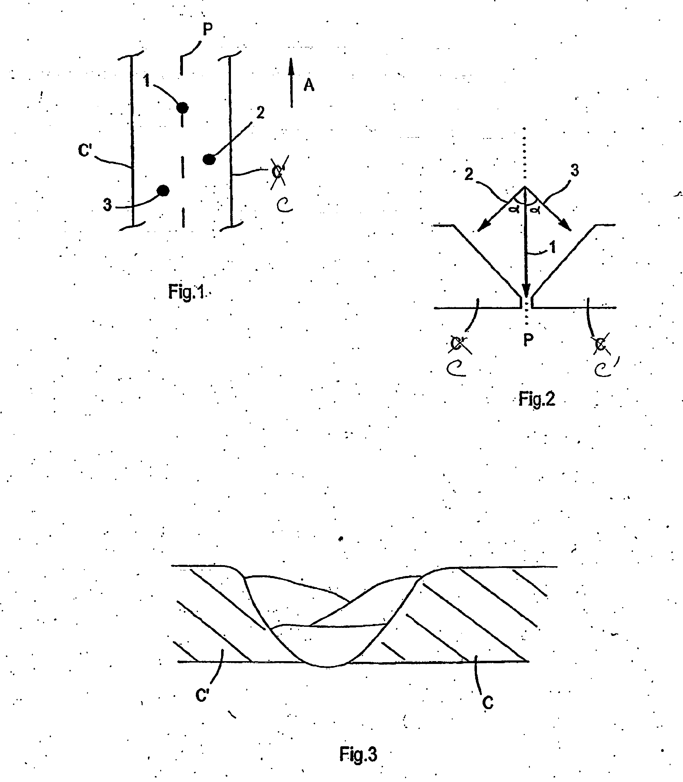

Comme cela est représenté à la figure 2, les torches suiveuses 2, 3 sont inclinées par rapport au plan de joint P, selon un angle α identique mais de manière opposée l'une à l'autre par rapport au plan de joint P.

La distance entre les extrémités des torches suiveuses 2, 3 peut être réglée tant suivant l'axe des conduits à assembler que suivant la direction de soudage.

Les trois torches de soudage 1, 2, 3 peuvent être fixées de manière rigide par rapport à la tête de soudage mais elles peuvent présenter un degré de liberté leur permettant d'osciller, l'oscillation se faisant sur une faible amplitude à l'aide de moyens d'entraînement en oscillation appropriés.

## Revendications

1. Dispositif de soudage automatique constitué d'au moins un chariot portant au moins une tête de soudage comprenant au moins une torche (1) de soudage (1) destinée à être centrée par rapport au plan de joint (P), pour assurer la passe de pénétration et porte également au moins deux autres torches de soudage (2, 3), dites suiveuses, positionnées respectivement l'une après l'autre après la première torche de soudage dite centrale (1),
**caractérisé en ce que** le dispositif de soudage automatique est du type MIG/MAG, **en ce que** la torche (1) guide un fil électrode fusible le long d'un plan de joint (P) entre des conduits à souder, qui amène le courant à l'extrémité du fil électrode pour générer un arc électrique et assurer la fusion du métal d'apport, **en ce que** la tête de soudage (1) est centrée perpendiculairement aux conduits (C, C') à souder, et **en ce que** les torches de soudage (2, 3) dites suiveuses sont décalées en retrait respectivement de part et d'autre de la torche dite centrale (1) pour réaliser des passes latérales.

2. Dispositif selon la revendication 1,
**caractérisé en ce que** les torches suiveuses (2, 3) s'étendent respectivement dans un plan parallèle au plan dans lequel s'étend la torche dite centrale (1)..

3. Dispositif selon la revendication 1,
**caractérisé en ce que** les torches suiveuses (2, 3) sont inclinées par rapport au plan de la torche dite centrale (1), selon des angles (α) d'une valeur égale mais de manière opposée l'une à l'autre par rapport audit plan.

4. Dispositif selon l'une des revendications 1 à 3,
**caractérisé en ce que** la distance entre les extrémités des torches suiveuses (2, 3) est réglable tant suivant l'axe des conduits à assembler que suivant la direction de soudage.

5. Dispositif selon l'une des revendications 1 à 4,
**caractérisé en ce que** la distance entre la première torche (1) et les deux torches de soudage suiveuses (2, 3) est variable.

6. Dispositif selon l'une des revendications 1 à 5,
**caractérisé en ce que** les trois torches de soudage (1, 2, 3) sont oscillantes.

7. Dispositif selon l'une des revendications 1 à 6,
**caractérisé en ce qu'**il comporte au moins des moyens de contrôle et de régulation de la distance entre la torche de soudage centrale (1) et le fond du chanfrein, ledit contrôle de cette distance étant assuré par mesure en temps réel d'au moins un paramètre électrique tel qu'intensité, tension, impédance de la torche et régulation en temps réel dudit paramètre électrique en fonction des différentes consignes pré programmées en fonction de la position circonférentielle autour des extrémités des conduits à assembler par régulation de la distance entre torche de soudage et fond de chanfrein par des moyens appropriés.

8. Dispositif selon la revendication 7,
**caractérisé en ce que** les moyens de régulation de la distance entre la torche de soudage centrale (1) et le fond du chanfrein sont des moyens de régulation de la hauteur de la tête de soudage et donc des trois torches (1, 2, 3) par rapport aux conduits.

9. Dispositif selon la revendication 7,
**caractérisé en ce qu'**il comporte des moyens de contrôle et de régulation de la distance torche de soudage/fond de chanfrein pour chacune des torches de soudage.

10. Dispositif selon l'une des revendications 1 à 9,
**caractérisé en ce que** le centrage de l'ensemble des torches est assuré par des moyens de mesure en temps réel des paramètres électriques tel qu'intensité, tension, des deux torches suiveuses (2, 3), puis après comparaison entre les valeurs obtenues pour chacune de ces deux torches suiveuses (2, 3) par envoi d'un signal automatique au module de translation/centrage afin d'obtenir les mêmes valeurs sur chacune des deux torches (2, 3).

11. Dispositif de soudage selon l'une des revendications 1 à 10,
**caractérisé en ce que** le fil électrode de la première torche (1) dite centrale est un fil plat et les fils électrodes des deux torches dite suiveuses (2,3) sont des fils cylindriques.

## Patentansprüche

1. Automatische Schweißvorrichtung mit mindestens einem Schlitten, der mindestens einen Schweißkopf trägt mit mindestens einem Schweißbrenner (1), der dazu bestimmt ist, relativ zu einer Verbindungsebene (P) zentriert zu werden, um einen Durchgang sicherzustellen, und der ebenfalls mindestens zwei weitere Begleitschweißbrenner genannte Schweißbrenner (2, 3) trägt, die jeweils hintereinander hinter dem Zentralschweißbrenner (1) genannten Schweißbrenner angeordnet sind,
**dadurch gekennzeichnet, dass** die automatische Schweißvorrichtung vom Typ MIG/MAG ist, dass der Brenner (1) einen Elektrodenschmelzdraht entlang einer Verbindungsebene (P) zwischen zu schweißenden Rohren führt, wodurch der Strom an das Ende des Elektrodendrahts geführt wird, um einen Lichtbogen zu erzeugen, und um das Schmelzen des Zusatzwerkstoffs sicherzustellen, und dadurch, dass der Schweißkopf (1) senkrecht auf den zu schweißenden Rohren (C, C') zentriert ist, und dadurch, dass die Begleitschweißbrenner (2, 3) jeweils gegenüber dem Zentralschweißbrenner zurückgesetzt und zu beiden Seiten versetzt angeordnet sind, um seitliche Durchgänge zu realisieren.

2. Vorrichtung nach Anspruch 1,
**dadurch gekennzeichnet, dass** die Nachfolgeschweißbrenner (2, 3) sich jeweils in einer Ebene erstrecken, die parallel zur Ebene ist, in der sich der zentrale Schweißbrenner (1) erstreckt.

3. Vorrichtung nach Anspruch 1,
**dadurch gekennzeichnet, dass** die Nachfolgeschweißbrenner (2, 3) gegenüber der Ebene des Zentralschweißbrenners (1) mit Winkeln (α) geneigt sind, die einen gleichen Wert haben, jedoch bezüglich der Ebene entgegengesetzt orientiert sind.

4. Vorrichtung nach einem der Ansprüche 1 bis 3,
**dadurch gekennzeichnet, dass** der Abstand zwischen den Enden der Nachfolgeschweißbrenner (2, 3) sowohl entlang der Achse der zusammenzufügenden Rohre als auch entlang der Schweißrichtung einstellbar ist.

5. Vorrichtung nach einem der Ansprüche 1 bis 4,
**dadurch gekennzeichnet, dass** der Abstand zwischen dem ersten Schweißbrenner (1) und den beiden Nachfolgeschweißbrennern (2, 3) veränderbar ist.

6. Vorrichtung nach einem der Ansprüche 1 bis 5,
**dadurch gekennzeichnet, dass** die drei Schweißbrenner (1, 2, 3) Pendelschweißbrenner sind.

7. Vorrichtung nach einem der Ansprüche 1 bis 6,
**dadurch gekennzeichnet, dass** sie mindestens Mittel zur Steuerung und Regelung des Abstandes zwischen dem Zentralschweißbrenner (1) und dem Boden der Fase aufweist, wobei die Steuerung dieses Abstandes durch Messung in Echtzeit mindestens eines elektrischen Parameters wie der Stromstärke, der Spannung, der Impedanz des Schweißbrenners, und durch Regelung in Echtzeit dieses elektrischen Parameters in Abhängigkeit von verschiedenen vorprogrammierten Sollwerten in Abhängigkeit von der Umfangslage um Enden von zusammenzufügenden Rohren durch Einstellung des Abstandes zwischen dem Schweißbrenner und dem Boden der Fase durch geeignete Mittel sichergestellt wird.

8. Vorrichtung nach Anspruch 7,
**dadurch gekennzeichnet, dass** die Mittel zur Regelung des Abstands zwischen dem Zentralschweißbrenner (1) und dem Boden der Fase Mittel zum Regeln der Höhe des Schweißkopfes und somit der Höhe der drei Schweißbrenner (1, 2, 3) relativ zu den Rohren sind.

9. Vorrichtung nach Anspruch 7,
**dadurch gekennzeichnet, dass** sie Mittel zum Steuern und Regeln des Abstands zwischen Schweißbrenner und Boden der Fase für jeden der Schweißbrenner aufweist.

10. Vorrichtung nach einem der Ansprüche 1 bis 9,
**dadurch gekennzeichnet, dass** die Zentrierung der Gesamtheit der Schweißbrenner sichergestellt wird durch Mittel zum Messen elektrischer Parameter in Echtzeit, wie Stromstärke, Spannung der beiden Nachfolgeschweißbrenner (2, 3), und anschließend nach Vergleich zwischen den für jeden der beiden Nachfolgeschweißbrenner (2, 3) erhaltenen Werte, durch Senden eines automatischen Signals an ein Verschiebe-/Zentriermodul, um die gleichen Werte für jeden der beiden Schweißbrenner (2, 3) zu erhalten.

11. Schweißvorrichtung nach einem der Ansprüche 1 bis 10,
**dadurch gekennzeichnet, dass** der Elektrodendraht des ersten Schweißbrenners (10), genannt Zentralschweißbrenner, ein flacher Draht ist, und dass die Elektrodendrähte der beiden Nachfolgeschweißbrenner (2, 3) zylindrische Drähte sind.

## Claims

1. Automatic welding device consisting of at least one carriage carrying at least one welding head comprising at least one welding torch (1) intended to be centred relative to the joint plane (P) to perform the penetration pass and also carries at least two other welding torches, said follower welding torches (2, 3), positioned respectively one after the other after the first welding torch, said central welding torch (1), **characterised in that** the automatic welding device is of the MIG/MAG type, **in that** the torch (1) guides a consumable electrode wire along a joint plane (P) between pipes that are to be welded, which supplies the current to the end of the electrode wire in order to generate an electric arc and ensure melting of the filler metal, **in that** the welding head (1) is centred perpendicularly to the pipes (C, C') that are to be welded, and **in that** said follower welding torches (2, 3) are respectively offset in recessed manner on either side of said central torch (1) for carrying out lateral passes.

2. Device according to claim 1, **characterised in that** the follower torches (2, 3) respectively extend in a plane parallel to the plane in which said central torch (1), extends.

3. Device according to claim 1, **characterised in that** the follower torches (2, 3) are inclined relative to the plane of said central torch (1), at angles (α) of equal value but opposite one another relative to said plane.

4. Device according to one of claims 1 to 3, **characterised in that** the distance between the ends of the follower torches (2, 3) is adjustable both along the axis of the pipes to be joined and in the direction of welding.

5. Device according to one of claims 1 to 4, **characterised in that** the distance between the first torch (1) and the two follower welding torches (2, 3) is variable.

6. Device according to one of claims 1 to 5, **characterised in that** the three weld torches (1, 2, 3) are oscillatory.

7. Device according to one of claims 1 to 6, **characterised in that** it comprises at least means for monitoring and adjusting the distance between the central welding torch (1) and the root of the weld, the monitoring of this distance being carried out by real-time measurement of at least one electric parameter such as current, voltage, impedance of the torch, and real-time adjustment of said electric parameter as a function of the different pre-programmed set-points as a function of the circumferential position about the ends of the pipes that are to be joined by adjusting the distance between the welding torch and the root of the weld by suitable means.

8. Device according to claim 7, **characterised in that** the means for adjusting the distance between the central welding torch (1) and the root of the weld are means for adjusting the height of the welding head and hence of the three torches (1, 2, 3) relative to the pipes.

9. Device according to claim 7, **characterised in that** it comprises means for monitoring and adjusting the distance between the welding torch and the root of the weld for each of the welding torches.

10. Device according to one of claims 1 to 9, **characterised in that** the centring of the set of torches is ensured by means for real-time measurement of the electric parameters such as current or voltage of the two follower torches (2, 3), then after comparison between the values obtained for each of these two follower torches (2, 3) by automatically sending a signal to the translation/centring module in order to obtain the same values on each of the two torches (2, 3).

11. Welding device according to one of claims 1 to 10, **characterised in that** the electrode wire of said central first torch (1) is a flat wire and the electrode wires of the two said follower torches (2, 3) are cylindrical wires.
